# EUROPÄISCHE PATENTSCHRIFT

(11) **EP 0 563 436 B1**
(45) Veröffentlichungstag und Bekanntmachung des Hinweises auf die Patenterteilung: **26.06.1996**
(21) Anmeldenummer: 92114192.5
(22) Anmeldetag: 20.08.1992
(51) Int. Cl.: E04H 5/04, H02B 7/06

(54) **Transportable Raumzelle und Verfahren zum herstellen einer Raumzelle**
Transportable box and its erection method
Bâtiment transportable et sa méthode de construction

(30) Priorität: 31.03.1992 DE 4210658
(43) Veröffentlichungstag der Anmeldung: 06.10.1993
(73) Patentinhaber: Betonbau GmbH, D-68753 Waghäusel (DE)
(72) Erfinder: Primus, Illo-Frank, Dr. Ing., W-7507 Pfinztal 1 (DE); Kaute, Christoph, Dipl.-Ing., W-7514 Leopoldshafen (DE); Schmitt, Bernd, Dipl.-Ing., W-3201 Holle/Sottrum (DE)
(74) Vertreter: Hiebsch, Gerhard F., Dipl.-Ing.

(56) Entgegenhaltungen:
- EP-A- 0 196 624
- DE-A- 3 110 304
- DE-U- 8 334 221

## Beschreibung

Die Erfindung betrifft eine transportable Raumzelle nach dem Oberbegriff des Patentanspruchs 1. Zudem betrifft die Erfindung ein Verfahren zur Herstellung dieser Raumzelle.

Der Zeileninennraum einer beispielsweise aus der Schrift zum DE-GM 83 34 221 bekannten Umspannstation dieser Art ist in einen Umspannraum zur Aufnahme des Transformators mit darunterliegender Ölwanne sowie einen Schaltraum zur Aufnahme der Hoch-, Mittel- oder Niederspannungsschaltgeräte aufgeteilt. Solche Stationen werden als sog. Fertigstationen werkseitig mit den notwendigen Schaltgeräten -- mit Ansnahme des Transformators --, Befestigungsschienen und der kompletten elektrischen Installation samt Erdung ausgerüstet, so daß an der Baustelle nur noch der üblicherweise auf Rädern montierte Transformator auf in der Station vorhandenen Schienen in den Zelleninnenraum eingeschoben werden muß. Letzterer ist dank zweier horizontal schwenkbarer Türen zugänglich, die Teil einer aus Profilen und Platten bestehenden Seitenwand sind.

Mit jenem DE-GM 83 34 221 wurde zur Vereinfachung vorgeschlagen, ein Paar von Betonrippen als Schienen für den Transformator der Umspannstation auszugestalten sowie eine dritte -- ebenfalls an die Bodenplatte angeformte und gegenüber den beiden anderen höher aufragende -- Betonrippe als Teil der Ölwanne vorzusehen. Eine vierte angeformte Rippe dient hier als Auflager für Fußbodenplatten insbesondere in dem die Schaltschränke aufweisenden Teil der Umspannstation und kann in Anpassung an die unterschiedlichen Fußbodenhöhen selbst verschiedene Höhen aufweisen.

Nicht begehbare sog. Kleinstationen sind der EP-PS-196 624 zu entnehmen mit einer i. w. an der Bodenoberfläche oder Erdgleiche endenden Bodenwanne aus Beton, auf der sich ein Gehäusekörper aus einem Stabgerüst für Gußausfachungen, Türen od. dgl. erhebt. Zur Herstellung wird hier über die Stationshöhe von 200 cm eine konische Kernschalung eingesetzt.

Aus der DE-A-31 10 304 ist eine Raumzelle als elektrische Netzstation bekannt, die untere Seitenwände und einen auf den unteren Seitenwänden aufliegenden Zwischenboden aufweist. Von dem Zwischenboden erstreckt sich aufwärts eine Zwischenwand als Druckschild, die einen vorbestimmten Abstand in den Innenraum der Netzstation hineingezogen ist und bis knapp unter das Dach der Station geführt ist.

In Kenntnis dieses Standes der Technik hat sich der Erfinder das Ziel gesetzt, eine derartige Kleinstation auf einfache und kostengüngstige Weise herzustellen, auszurüsten sowie einzusetzen. Zudem soll die Anpaßbarkeit an unterschiedliche Typen der elektrischen Einbauelemente erleichtert werden.

Zur Lösung dieser Aufgabe führen die Lehren der unabhängigen Patentansprüche; die Unteransprüche geben vorteilhafte Weiterbildungen an.

Erfindungsgemäß sind an die Bodenplatte zwei Seitenwände einer der Raumzelle entsprechenden Höhe sowie diese Seitenwände verbindende Stirnwände und dazu etwa parallele Bodenrippen monolithisch angeformt; die Bodenrippen bilden mit den Seitenwänden eine Bodenwanne für den Umspannraum sowie jeweils einen Sockel für eine auf sie nachträglich aufsetzbare -- den Umspannraum zwischen den Seitenwänden begrenzende -- Zwischenwand oder Wandplatte.

Zudem hat es sich als günstig erwiesen, in den Stirnwänden jeweils eine Verschlußtüre -- für einen Mittelspannungs- bzw. einen Niederspannungsraum unterzubringen; in einer günstigen Ausführung besteht die Stirnwand in ihrem oberen Bereich aus der Verschlußtür, d. h. nur der untere Wandbereich ist monolithisch angegossen und zwar bis an eine die Einbautiefe der Umschaltstation vorgebende Höhenlinie.

Die Höhenlinie der Oberkanten der Stirnwände bestimmt vorteilhafterweise auch die Lage der Schwellenkante der Lüftertür/en, darüberhinaus noch die Mindesthöhe der an den Niederspannungsraum angrenzenden Bodenrippe; der Niederspannungsraum soll am unteren Ende seiner Stirnwand zur besseren Kabelmontage offen sein, weshalb die Höhe der monolithischen Ölwanne an dieser Seite besonders wichtig ist. Auf die andere Bodenrippe trifft dies nicht in gleichem Maße zu, da der Mittelspannungsraum erfindungsgemäß seinerseits eine geschlossene wasserdichte Bodenwanne anbietet.

Die auf die Bodenrippen nachträglich aufzusetzenden und festzulegenden Zwischenwände oder Wandplatten sind gut geeignet, Halteprofile, Befestigungsschrauben und dgl. zur Festlegung der Mittelspannungs- bzw. Niederspannungsanlage aufzunehmen sowie Durchbrüche zum Durchführen der Verbindungsleitungen zwischen den Anlagen und dem Transformator. Diese Wandplatten können je nach Schalterfabrikat entsprechend unterschiedliche Durchbrüche und Befestigungsmöglichkeiten anbieten; die Anpassung der Raumzelle reduziert sich somit auf die Ausgestaltung dieser Zwischenwand/-wände.

Die einmontierbaren Zwischenwände können einbetonierte Anschweißplatten besitzen, mit denen sie an ebenfalls einbetonierten Anschweißplatten im Betonkörper thermisch befestigt werden. Zudem hat es sich als günstig erwiesen, solche Zwischenwände an ihrer linken und rechten Begrenzungsseite trapezförmig auszubilden, so daß die bevorzugt in Nuten des konischen Baukörpers eingesenkte Zwischenwand sich diesem anzupassen vermag.

Der erfindungsgemäße Baukörper kann im Bereich aller benötigten Türzargen Aussparungen mit besonders profilierten und durch einbetonierte Metallteile verstärkte Betonnasen aufweisen, in welche ein spezielles Zargenprofil für ein- und doppelflügelige Türen sowie Lüftertüren von oben her eingeschoben zu werden vermag.

In der Nähe der Durchbrüche für die Lüftertüren soll im Zelleninnern wenigstens einer Seitenwand mindestens ein Erdungsanschluß -- vorteilhafterweise eine durchgehende sog. HZA-Ankerschiene -- einbetoniert sein, an der gegenüberliegenden Seitenwand ein Leerrohr. Dieses besitzt in jedem Raum Abgangsdosen, so daß die Beleuchtungkörper von NS-, MS- und Transformatorenraum untereinander verbindbar und mit einem einzigen Schalter bedienbar sind.

Auch hat es sich als günstig erwiesen, im Transformatorenraum mindestens an einer Längsseite links und rechts neben der Lüftertür senkrechte Halteschienen oberflächenbündig in die Seitenwand einzubetonieren, an deren oberen Ende auch die Dachplatte mit Schlössern verankert werden kann.

Außerdem soll die zwischen dem Mittelspannungsraum und dem Transformatorenraum vorgesehene Zwischenwand eine breite Sockelausnehmung für ein Kühlgitter aus mehreren Lagen von Streckmetall od. dgl. aufweisen.

Nach einem weiteren Merkmal der Erfindung ist der wannenartige Bodenbereich des Transformatorenraumes mit einer zweiten Wanne aus Metall, Kunststoff oder anderem Werkstoff ausgekleidet, welche vorteilhafterweise bei der Herstellung der Raumzelle in diese einbetoniert werden kann.

Im Rahmen der Erfindung liegt es auch, die bevorzugt als leichtes Strangpreßprofil ausgebildete Zarge der Lüftertür/en bzw. der Verschlußtüre/n in die Seitenwände der Raumzelle einzugießen, so daß eine gesonderte Festlegung entfallen kann. Der Querschnitt eines solchen Strangpreßprofils besteht beispielsweise aus einem der Tür zugekehrten Rinnenprofil mit Anformstegen an der Außenseite, welche als Anker in den Betonkörper eingreifen. Einer dieser Anformstege bildet erfindungsgemäß mit einem Zwischenstück und einem Profilhaken des Zargenprofils einen sich nach außen öffnenden Rinnenraum.

Nach einem anderen Merkmal der Erfindung weist der Baukörper unterhalb der Tür zum Mittelspannungsraum eine demontierbare Türschwelle sowie eine demontierbare Frontplatte (Faserzement-Platte) auf, die mittels entsprechenden Vorrichtungen oberflächenwasserdicht abgedichtet werden kann; die demontierbae Platte und die demontierbare Türschwelle erleichtern die Montage der Kabelendverschlüsse an der Mittelspannungsanlage. Diese Konstruktion wird mit denselben eingießbaren Zargenprofilen ermöglicht, welche als Rahmen für die Lüftertüre bzw. die Verschlußtüre dienen. Dazu ist der Schwellenteil des von den Zargenprofilabschnitten gebildeten Rahmens lösbar auf einem ortsfesten Querprofil, beispielsweise einem beidends eingegossenen Winkelprofil, festgelegt, welches in Abstand zur Schwellenkante der Seitenwandausnehmung bzw. zur Oberkante der Stirnwand verläuft.

Selbständig Schutz wird für die besondere Ausgestaltung der Lüftertür begehrt; deren Rahmen ist als Hohl- oder Kastenprofil mit einem die von parallelen Lamellen gebildete Türfüllung umgebendem Doppelwinkelprofil in der Querschnittsform eines liegenden S ausgebildet, und vom Kastenprofil ragt eine an das Zargenprofil anlegbare Dichtlippe ab.

In einer anderen Ausgestaltung ist der Rahmen der Lüftertür ein querschnittlich etwa H-förmiger Profilstreifen, dessen äußerer Seitenschenkel dem Zargenprofil mit einer Dichtlippe anliegt und dessen Innenschenkel zueinander parallele Lamellen umgibt.

Um einen Zugriff von außen her zu unterbinden, soll an der Lüftertür hinter den Lamellen ein Lochblech od. dgl. verlaufen.

Die beschriebene Umspann- oder Kleinstation kann mittels eines neuen Herstellungsverfahrens sehr wirtschaftlich erzeugt werden, da die Form, insbesondere der Kern gegenüber schrumpfbaren Kernen, weniger Investitionen beansprucht und darüber hinaus die Körper auf Lager produziert werden können; die je Körper individuellen Ausführungsmerkmale, die an die jeweiligen Schalterfabrikate gebunden sind, bleiben erfindungsgemäß auf die abgetrennten Teilstücke der Zwischenwände reduziert. Somit können auch Zargen für Türen und Lüftertüren in den Körper einbetoniert werden, wodurch diese besonders guten Halt bekommen, was für einen Störlichtbogenfall von hoher Bedeutung ist.

Dank der Erfindung können jeweils individuell ausgeführte und den jeweiligen Schalterfabrikaten angepaßte Umspannstationen schnell geliefert werden; dem Fertigteillager werden ein Körper und eine Dachplatte entnommen und lediglich die noch herzustellenden individuellen Zwischenwand-Teile produziert sowie einmontiert. Durchlaufzeiten und Lieferzeiten für funktionsgerchte Kompaktstationen werden somit wesentlich verkürzt.

Außerdem kann erstmals eine Ölwanne ohne Arbeitsfuge hergestellt und dem Besorgnisgrundsatz des Wasserhaushaltsgesetzes begegnet werden, wobei gleichzeitig einbetonierte oder eingeschobene Türzargen eingesetzt sind, die mit der gesamten waben- und kastenförmigen Unterkonstruktion und der mit vier starken Winkeln angeschraubten Dachplatte eine hochfeste Konstruktion darstellen.

Es folgt die Beschreibung bevorzugter Ausführungsbeispiele anband der Zeichnung; diese zeigt in:
- Fig. 1:: eine Schrägsicht auf eine Umschalt- oder Kleinstation;
- Fig. 2:: eine gegenüber Fig. 1 vergrößerte Seitenansicht der Umschaltstation;
- Fig. 3:: einen vergrößerten Längsschnitt durch die Umschaltstation mit angedeuteter Installation;
- Fig. 4:: einen in Linie IV - IV der Fig. 5 verlaufenden Querschnitt durch die Umschaltstation;
- Fig. 5:: einen Teil der Umschaltstation ohne Installationen;
- Fig. 6:: einen vergrößerten Ausschnitt aus Fig. 3 nach deren Feld VI;
- Fig. 7:: einen vergrößerten Ausschnitt aus Fig. 3 nach deren Feld VII;
- Fig. 8:: die Draufsicht auf die Umschaltstation ohne Dachplatte;
- Fig. 9:: einen vergrößerten Ausschnitt aus Fig. 8 nach deren Feld IX;
- Fig. 10:: einen vergrößerten Ausschnitt aus Fig. 8 nach deren Feld X;
- Fig. 11:: einen Teil der Umschaltstation während des Herstellungsprozesses;
- Fig. 12:: der Blick in den Körper der Umschaltstation;
- Fig. 13:: den Schnitt durch Fig. 12 nach deren Linie XIII - XIII;
- Fig. 14:: den Schnitt durch Fig. 12 nach deren Linie IVX - IVX;
- Fig. 15:: die Frontansicht einer Zwischenwand;
- Fig. 16:: ein Zubehörteil zur Zwischenwand der Fig. 15;
- Fig. 17:: die Frontansicht einer anderen Zwischenwand;
- Fig. 18:: eine Einsatzeinheit mit Verschlußtür für die Umschaltstation in Frontansicht;
- Fig. 19:: einen schematisierten und vergrößerten Teillängsschnitt durch Fig. 18;
- Fig. 20:: einen vergrößerten Teilquerschnitt durch Fig. 18;
- Fig. 21:: den Vertikalschnitt durch eine Lüftertür;
- Fig. 22:: den Vertikalschnitt durch eine andere Ausführungsform der Lüftertür.

Eine quaderförmige, nicht begehbare Umschalt- oder Kleinstation 10 -- einer beispielsweisen Länge a von hier etwa 3 600 mm, einer Breite b von 1 550 mm sowie einer äußeren Höhe h von 2 200 mm -- zur Aufnahme eines auf Rollen 12 verfahrbaren Transformators 14 weist an eine Bodenplatte 16 angeformte Seitenwände 17 sowie zwei diese in ihrem unteren Bereich verbindende Stirnwände 18,19 auf. Die Seitenwände 17 tragen eine aufgesetzte Dachplatte 20.

In den Seitenwänden 17 ist jeweils eine Ausnehmung 22 für eine Lüftertür 24 vorgesehen, deren Zarge 26 in die Seitenwand 17 eingegossen ist. Die Schwellenkante 23 der Ausnehmung 22 verläuft in einem Abstand h1 von etwa 800 mm zur Bodenplatte 16 der Dicke e von 100 mm. Diese Schwellenkante 23 fluchtet mit den Oberkanten 21 der beiden Stirnwände 18,19 und bestimmt gleichzeitig die Einsatztiefe der Umschaltstation 10; diese wird so in gewachsenen Boden eingelassen, daß die Erdgleiche oder Bodenoberfläche B geringfügig unterhalb der Schwellenkante 23 bzw. Oberkanten 21 liegt.

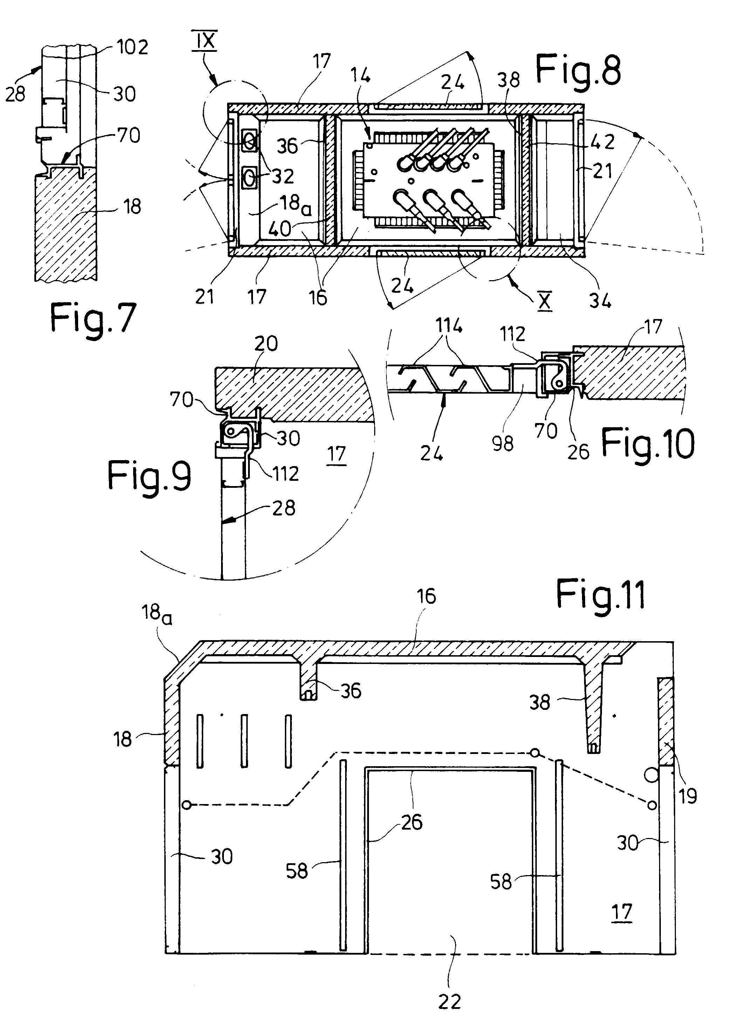

Zwischen den Oberkanten 21 der Stirnwände 18,19 und der Dachplatte 20 erstrecken sich Verschlußtüren 28, deren Zargen 30 ebenfalls in den Körper der Kleinstation 10 eingegossen sind. Diese Verschlußtüren 28 können -- wie inbesondere Fig. 8 andeutet -- ein- oder zweiflügelig ausgeführt sein.

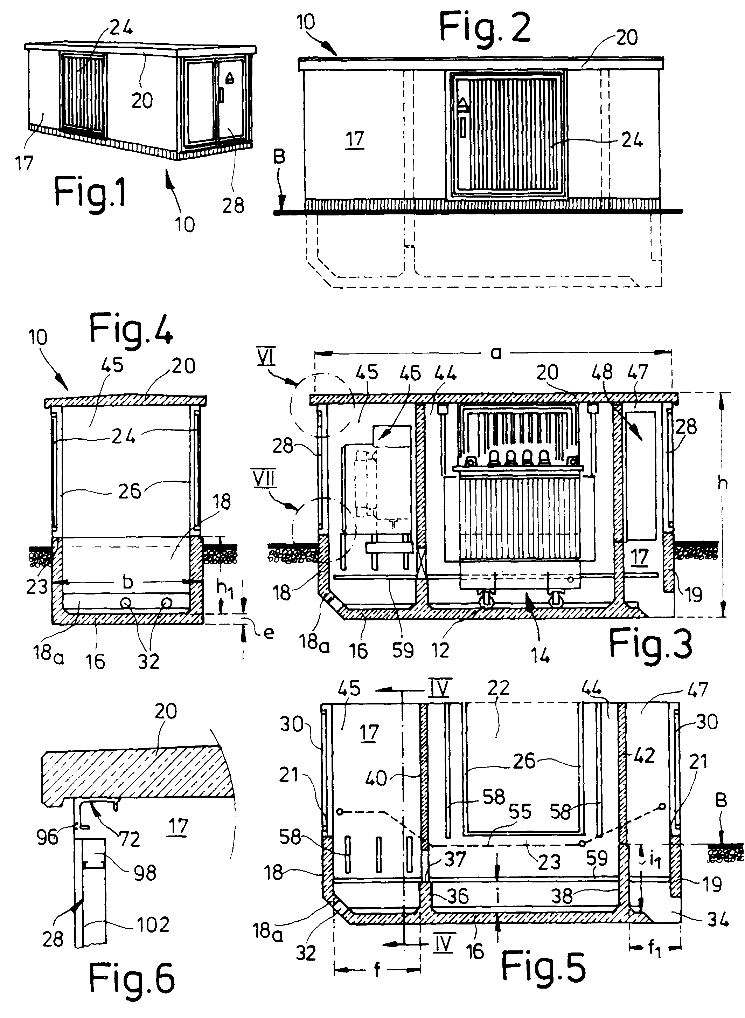

Die in Fig. 3 linke Stirnwand 18 der Kleinstation 10 ist in ihrem an die Bodenplatte 16 anschließenden Bereich 18a in einem Winkel von etwa 45° nach außen geneigt und dort mit zwei Durchbrüchen 32 zur Kabeldurchführung versehen. Die andere Stirnwand 19 besteht aus einem sich zwischen den Seitenwänden 17 erstreckenden Betonstreifen, der mit der -- in Abstand zu ihm verlaufenden -- Bodenplatte 16 einen Bodenschlitz 34 an der entsprechenden unteren Ecke des Körpers der Umschaltstation 10 begrenzt. Die Bodenplatte 16 begrenzt jenen Bodenschlitz 34 mit einer abgeschrägten Kante, um Beschädigungen bei hier durchgeschobenen Kabeln hintanzuhalten.

Im lichten Abstand f (58 mm) von der abgewinkelten Stirnwand 18 ist aus der Bodenplatte 16 eine Bodenrippe 36 der Höhe i von 300 mm herausgeformt, die sich ebenso nach oben konisch verjüngt wie eine zweite Bodenrippe 38, deren Abstand f1 zur nächstliegenden Stirnwand 19 nur 400 mm mißt, deren Höhe i1 jedoch 630 mm beträgt. Der Bodenbereich 16,17,18,18a,36 des Mittelspannungsraumes 45 ist dank in Fig. 8 angedeuteter dichtender Kabeldurchführungen in den Durchbrüchen 32 eine dichte Wanne.

Beide Bodenrippen 36,38 sind Abschnitte von Zwischenwänden --nämlich Sockelschwellen für auf ihre Oberkanten 37 aufgesetzte Wandplatten 40,42 --, welche das Innere der Kleinstation 10 in einen Umspannraum 44 für den Transformator 14, einen -- in Fig. 5 links liegenden -- Mittelspannungsraum 45 sowie einen auf der anderen Seite des Umspannraumes 44 angeordneten, im Längsschnitt schmäleren Niederspannungsraum 47 zur Aufnahme entsprechender MS- bzw. NS-Schaltgeräte 46 bzw. 48 unterteilt. Die einsetzbaren Zwischenwände bzw. Wandplatten 40,42 erlauben eine einfache Anpassung der Raumzelle 10 an unterschiedliche Ausführungen der Schaltgeräte 46,48 und enthalten Anschweißplatten, mit denen sie thermisch an entsprechende Anschweißplatten der Seitenwände 17 angeschlossen werden. Die Zwischenwände 40,42 sind -- nicht dargestellt --an ihren Längskanten trapezförmig ausgestaltet, um sich dem konischen Baukörper anzupassen. In diesem sind Nuten zum Einsenken der Wandplatten 40,42 vorgesehen.

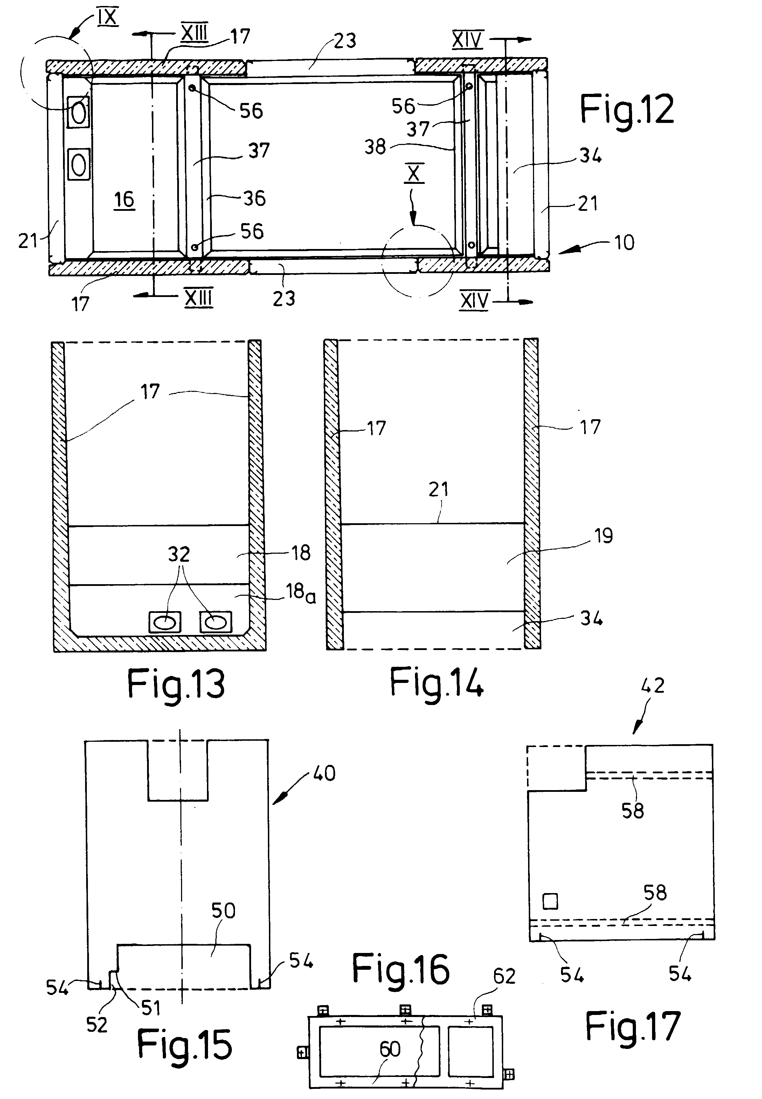

In die MS-Zwischenwand 40 ist gemäß Fig. 15 in ihrem unteren Bereich eine Sockelausnehmung 50 eingebracht, der an einer Flanke unter Bildung eines Schulterabsatzes 51 eine Aussparung 52 als Kabeldurchlaß und beidseits Dübel 54 zugeordnet sind. Letztere wirken beim Einsetzen der MS-Zwischenwand 40 - - entsprechend bei der NS-Zwischenwand 42 -- bolzenhaltend mit Gegenelementen 56 in den Bodenrippen 36,38 als Anschlußorgane zusammen. Die NS-Zwischenwand 42 sitzt in ihrer Gesamtlänge auf ihrem Basisabschnitt 38 auf und ist an ihrer zum Niederspannungsraum 47 gerichteten Seite mit Befestigungsschienen 58 für das Anbringen von Installationen ausgerüstet. Jene Ausnehmung 50 eines Maßes von etwa 900 x 300 mm nimmt einen entsprechenden Winkelrahmen 60 auf, an dem mittels eines leiterähnlichen Flachstahlrahmens 62 fünf Lagen aus Streckmetall als Kühlgitter festgelegt werden.

Der beschriebene Betonkörper 16 bis 19 wird in der in Fig. 11 gezeigten Lage -- mit obenliegender Bodenplatte 20 -- monolithisch gegossen, wobei die Zargen 26,30 gleichzeitig eingegossen werden. Ebenfalls werden in diesem Arbeitsgang die Befestigungsschienen 58, eine horizontal durchgehende -- in Fig. 5 die Oberkante 37 der Bodenrippe 36 etwa berührende -- Erdungsschiene 59 eingebracht sowie bei 55 angedeutete Unterputzrohre für Installationsleitungen.

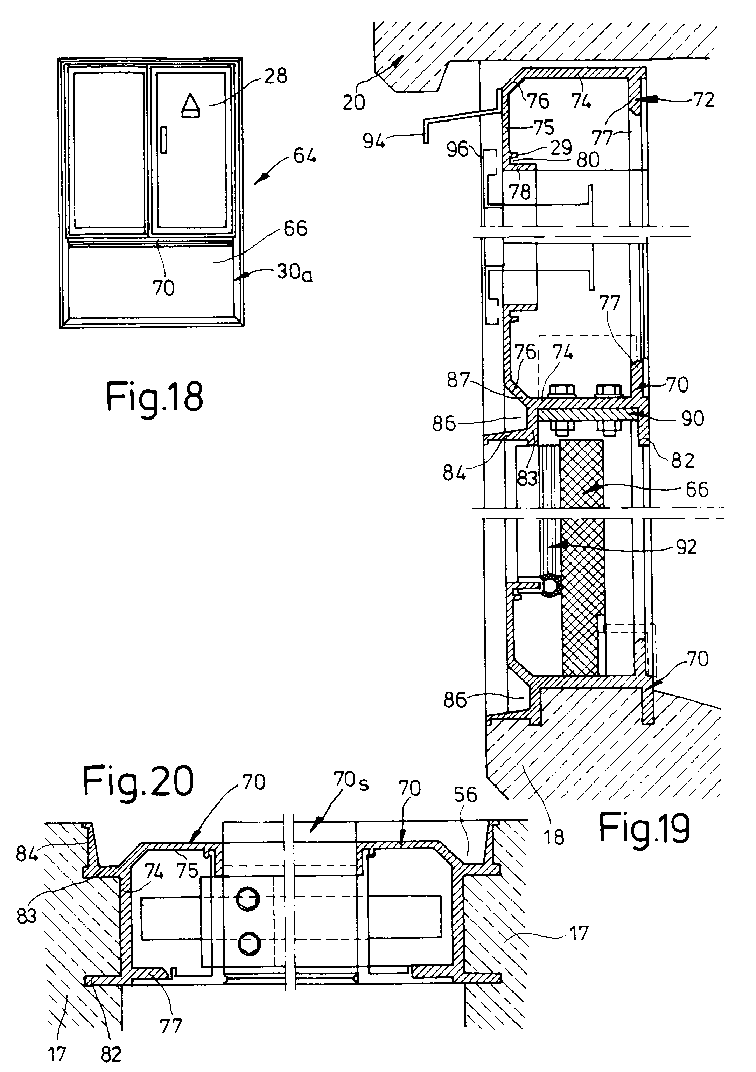

Fig. 18 bis 20 zeigen eine Einheit 64 aus einer zweiflügeligen Verschlußtür 28 und einer demontierbaren Frontplatte 66 aus Eternit, Asbest od. dgl.

Die Zarge 30a dieser Einheit 64 erfaßt nicht nur die Verschlußtür 28, sondern auch die Frontplatte 66 und bietet ein aus einer Aluminiumlegierung stranggepreßtes Zargenprofil 70 an. Dieses ist den Seiten- bzw. Stirnwänden 17 bzw. 18 zugeordnet und -- wie bereits erwähnt -- in diese eingegossen. Es bildet einen insgesamt U-förmigen Rahmen, der zur aufgesetzten Dachplatte 20 hin durch ein Rinnenprofil 72 anderer Ausgestaltung ergänzt wird.

Der Querschnitt des Rinnenprofils 72 besteht aus zwei rechtwinkelig zueinander stehenden Schenkeln 74,75, die durch ein -- einem Winkel von etwa 45° zu jedem der Schenkel 74,75 -- geneigtes Zwischenstück 76 verbunden sind. Der jener Dachplatte 20 zugeordnete längere Ansatzschenkel 74 ist mit einer parallel zum anderen Schenkel 75 verlaufenden Formrippe 77 ausgestattet, der in Einbaulage vertikale andere Schenkel 75 geht an seinem freien Ende in einen Winkelabschnitt 78 über. Diesem ist zum Zwischenstück 76 hin in geringem Abstand ein kurzer Formsteg 79 angeformt, der mit dem Winkelabschnitt 78 einen Einschubschlitz 80 begrenzt.

Das Zargenprofil 70 entspricht i. w. dem Rinnenprofil 72, weist jedoch an der der Formrippe 77 entgegengesetzen Außenfläche des längeren Schenkels 74 zwei zueinander parallele Anformstege 82,83 auf, welche parallel zur Formrippe 77 gerichtet sind. Der in Einbaulage an der Türaußenseite vorhandene Anformsteg 83 setzt am Innenteil des schrägen Zwischenstücks 76 an und bildet mit diesem sowie einem in dieser Einbaulage horizontal abkragenden Profilhaken 84 einen sich nach außen hin konisch öffnenden Rinnenraum 86.

In Fig. 19 ist in dem etwa in Figurenmitte horizontal verlaufenden Zwischenstück 76 eine Entwässerungsbohrung 87 zu erkennen, aus der Tropfwasser nach unten auf die als Ablauffläche dienende Außenfläche des Profilhakens 84 gelangt. Fig. 19 zeigt auch, daß der die Entwässerungsbohrung 87 anbietende Zargenabschnitt demontierbar auf einem ortsfesten Winkelprofit als Quereisen 90 od. dgl. Befestigungsmittel verschraubt ist, welches die obere Begrenzung des unteren Feldes für die Frontplatte 66 bildet, die zwischen dem beschriebenen oberen Zargenprofil 70 und einem gleichgestalteten unteren Zargenprofil 70 festliegt, letzteres ist in die Stirnwand 18,19 einbetoniert und zwar mittels der erwähnten Anformstege 82,83, deren Querschnitt jeweils dreiseitig vom Beton umgeben ist.

Mit 92 wird eine Schlauchdichtung für die Frontplatte 66 bezeichnet, mit 94 ein Wetterschenkel des Rinnenprofils 72 und mit 96 eine nur angedeutete Dichtlippe der Verschlußtür 28.

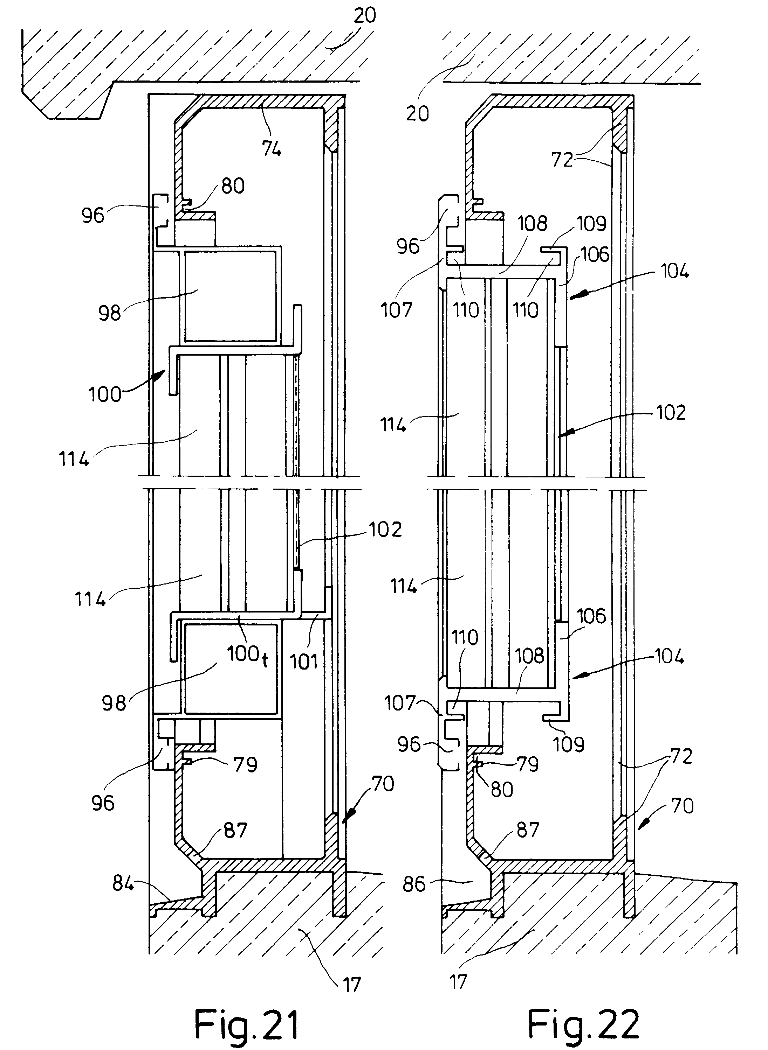

In der Querschnittsdarstellung der Fig. 20 sind die beiden seitlichen Zargenabschnitte und ihre Verankerung in den Seitenwänden 17 zu erkennen sowie die demontierbare Türschwelle, die der besseren Übersicht halber als 70s bezeichnet ist.

Die Ausführungsbeispiele der Fig. 21 und 22 bedienen sich der beschrieben Zargen- bzw. Rinnenprofile 70 bzw. 72 und unterscheiden sich durch unterschiedliche Ausführungen der Profile, welche die Lüftertüre 24 bilden.

In Fig. 21 sind Kastenprofile 98 als Rahmen für einen Türeinsatz zu erkennen, der aus einem querschnittlich nahezu S-förmigen Doppelwinkel 100 besteht. Die Querschnitte des oberen und unteren Doppelwinkels 100 sind zueinander gleichgerichtet. Zwischen diesem sind vertikale -- gemäß Fig. 10 querschnittlich etwa S-förmige -- Lamellen 114 sowie ein dahinterliegendes Lochblech 102 zu erkennen. Der in Fig. 21 untere Doppelwinkel 100t weist eine angeformte Rinne 101 als Wasserfang auf. Bei einer anderen Ausführung kann stattdessen der untere Doppelwinkel 100t länger sein und so den Wasserfang bilden.

In Fig. 22 ist das Türblatt 102 zwischen zwei im Querschnitt etwa H-förmigen Profilstreifen 104 mit jeweils einem zum Türblatt 102 hin vorstehenden Innenschenkel 106 und einem Außenschenkel 107 angebracht, die zueinander gegenläufig mit zueinander gerichteten Innenschenkeln 106 angeordnet sind. Die beiden Schenkel 106,107 ragen von einem horizontalen Querschnittstreifen 108 ab und der Außenschenkel 107 trägt die erwähnte Dichtlippe 96.

Der Querschnittstreifen 108 bildet mit angeformten Hakenrippen 109 eine Einschubbahn 110 beispielsweise für nicht dargestellte Dichtorgane oder nicht gezeigte Eckstücke, welche die einzelnen Zargenabschnitte zusammenhalten.

In diesem Zusammenhang sei nochmals auf Fig. 9 und 10 zurückgegriffen, welche -- ebenfalls einbetonierte -- Zargenprofile 70 erkennen lassen, in denen Scharniere 112 lagern. An diesen sitzt als Rahmen der Lüftertür 24 das Kastenprofil 98 für die dazwischen vertikal verlaufenden Lamellen 114. In Fig. 10 begrenzen jeweils zwei benachbarte sowie parallele Lamellen 114 einen mäanderartigen Luftweg, der gegen Zugriffe von außen geschützt ist.

In der Zeichnung ist nicht dargestellt, daß während des Herstellungsvorganges in den Umspann- oder Transformatorenraum 44 eine Innenwanne aus Stahl, Kunststoff oder anderem Werkstoff in den Bodenbereich einbetoniert wird.

## Patentansprüche

1. Transportable Raumzelle in Form einer teilweise in Erdreich abgesenkten, einen Umspannraum für einen Transformator od. dgl. enthaltenden Umspannstation mit wenigstens einer an eine Bodenplatte angegossenen Seitenwand und auf diese aufgesetzter Dachplatte, wobei an die Bodenplatte in den Zelleninnenraum ragende, sich querschnittlich von der Bodenplatte weg verjüngende Betonrippen angeformt sind
dadurch gekennzeichnet,
daß an die Bodenplatte (16) zwei Seitenwände (17) in Höhe (h) der Raumzelle (10) sowie diese verbindende Stirnwände (18,19) und dazu etwa parallele Bodenrippen (36,38) monolithisch angeformt sind, die Bodenrippen mit den Seitenwänden eine Bodenwanne für den Umspannraum (44) sowie jeweils einen Sockel für eine auf sie nachträglich aufsetzbare, den Umspannraum zwischen den Seitenwänden (17) begrenzende Zwischenwand oder Wandplatte (40,42) bilden.

2. Raumzelle nach Anspruch 1, dadurch gekennzeichnet, daß die Stirnwand (18,19) eine Verschlußtüre (28) für einen Mittelspannungsraum (45) bzw. einen Niederspannungsraum (47) aufweist, wobei gegebenenfalls die Oberkante (21) der Stirnwand (18,19) etwa in Höhe der Oberkante (37) einer der Bodenrippen (38) verläuft und die Verschlußtür (28) sich zwischen der Wandoberkante und den Seitenwänden (17) erstreckt.

3. Raumzelle nach Anspruch 1 oder 2, dadurch gekennzeichnet, daß in zumindest einer Seitenwand des Umspannraums eine Ausnehmung (22) für eine einer Zarge zugeordnete Lüftertür (24) od. dgl. bewegbares Verschließelement vorgesehen ist, eine Schwellenkante (23) der Ausnehmung (22) für die Lüftertür (24) mit der Oberkante (37) der dem Niederspannungsraum (47) zugeordneten Bodenrippe (38) etwa fluchtet, und/oder die Oberkante (21) der Stirnwände (18,19) die Einbautiefe der Raumzelle (10) bestimmt.

4. Raumzelle nach einem der Ansprüche 1 bis 3, dadurch gekennzeichnet, daß der Bodenbereich des Mittelspannungsraumes (45) als dichte Wanne ausgebildet und mit zumindest einer dichtenden Kabeldurchführung versehen ist und/oder der Umspannraum (44) eine dichte Innenwanne enthält, die insbesondere in die Raumzelle (10) eingegossen ist.

5. Raumzelle nach einem der Ansprüche 1 bis 4, dadurch gekennzeichnet, daß oberhalb der Oberkannte (37) der Bodenrippe (36) wenigstens eine Erdungsschiene (59) über den Bereich der dichten Wanne des Mittelspannungsraumes und des Niederspannungsraumes verläuft, welche sich etwa horizontal an einer Seitenwand (17) erstreckt.

6. Raumzelle nach wenigstens einem der Ansprüche 1 bis 5, dadurch gekennzeichnet, daß die auswechselbare Wandplatte oder Zwischenwand (40,42) in Nuten der beiden Seitenwände (17) einschiebbar ausgebildet ist, und/oder daß die auswechselbare Wandplatte oder Zwischenwand (40,42) Träger für festgelegte Halteprofile, Befestigungsmittel und/oder Anschlußteile von Schalteinrichtungen (46,48) und Kabeldurchführungen (52) ist.

7. Raumzelle nach wenigstens einem der Ansprüche 3 bis 6, dadurch gekennzeichnet, daß die Zarge (26,30) der Lüftertür (24) und/oder der Verschlußtür (28) ein in die Seitenwand (17) eingegossenes und bevorzugt stranggepreßtes Zargenprofil ist.

8. Raumzelle nach Anspruch 7, dadurch gekennzeichnet, daß der Querschnitt des Zargenprofils (70,72) zwei zueinander etwa rechtwinkelige Schenkel (74,75) aufweist, die untereinander durch ein zu ihnen geneigtes Eck- oder Zwischenstück (76) verbunden ist, wobei gegebenenfalls von dem an eine Wand (17 bis 19) oder die Dachplatte (20) ansetzbaren Schenkel (74) eine zum anderen Schenkel (75) etwa parallele Formrippe (77) abragt, die mit einem Winkelabschnitt des anderen Schenkels (75) ein offenes Kastenprofil ergibt.

9. Raumzelle nach Anspruch 8, dadurch gekennzeichnet, daß von der Außenseite des Schenkels (74) des Zargenprofils (70) zumindest zwei Anformstege (82,83) als Ankerteile abragen, und/oder ein Anformsteg (83) des Zargenprofils (70) mit dem Zwischenstück (76) und einem Profilhaken (84) einen sich nach außen öffnenden Rinnenraum (86) bildet.

10. Raumzelle nach Anspruch 8 oder 9, dadurch gekennzeichnet, daß das Zwischenstück (76) zumindest eine Bohrung (87) aufweist.

11. Raumzelle nach einem der Ansprüche 7 bis 10, dadurch gekennzeichnet, daß ein Schweilenteil des von den Zargenprofilen (70,72) gebildeten Rahmens auf einen orstfesten Querprofil (90) festgelegt ist, welches in Abstand zur Schwellenkante (23) der Seitenwandausnehmung (22) bzw. zur Oberkante (21) der Stirnwand (18,19) vorgesehen ist, wobei gegebenenfalls das Querprofil (90) ein Winkeleisen ist.

12. Raumzelle nach Anspruch 11, dadurch gekennzeichnet, daß der Zwischenraum zwischen dem Querprofil (90) und einem auf der unterhalb der Oberkante (21) liegendenden Oberkante (25) sitzenden Zargenprofil (70) durch eine Frontplatte (66) ausgefacht ist.

13. Raumzelle nach wenigstens einem der Ansprüche 3 bis 12, dadurch gekennzeichnet, daß der Rahmen der Lüftertüre (24) als Hohl- oder Kastenprofil (98) mit einem die von parallelen Lamellen (114) gebildete Türfüllung umgebendem Doppelwinkelprofil (100) in der Querschnittsform eines liegenden S ausgebildet ist, wobei vom Kastenprofil eine an das Zargenprofil (70,72) anlegbare Dichtlippe (96) abragt, wobei gegebenenfalls an der Lüftertür (24) hinter den Lamellen (114) ein Lochblech (102) angeordnet ist und/oder am Fuße der Lüftertür (24) hinter den Lamellen (114) eine Fangrinne (101).

14. Raumzelle nach wenigstens einem der Ansprüche 3 bis 12, dadurch gekennzeichnet, daß der Rahmen der Lüftertür (24) ein querschnittlich etwa H-förmiger Profilstreifen (104) ist, dessen äußerer Seitenschenkel (107) dem Zargenprofil (70,72) mit einer Dichtlippe (96) anliegt und dessen Innenschenkel (106) parallele Lamellen (114) umgibt, wobei gegebenenfalls an der Lüftertür (24) hinter den Lamellen (114) ein Lochblech (102) angeordnet ist und/oder am Fuße der Lüftertür (24) hinter den Lamellen (114) eine Fangrinne (101).

15. Verfahren zum Herstellen einer Raumzelle, nach wenigstens einem der voraufgehenden Ansprüche, dadurch gekennzeichnet, daß die Raumzelle aus Bodenplatte, Bodenrippen, Seitenwänden und Stirnwänden in einer Schalung um 180° gegenüber der Gebrauchslage gewendet betoniert sowie nach dem Erstarren und Entfernen der Außenschalung mittels einer Hydraulik-Vorrichtung von der konischen Kernschalung gelöst bzw. abgedrückt wird, wobei die die Länge und Dicke der monolithisch eingeformten Bodenrippen abbildenden Schalungsteile mittels Hydraulikzylindern um mindestens 50 mm verändert werden, indem zwei rechteckförmige Trennfugen an den die Querwandoberseiten abbildenden Schalungsteilen gegeben sind, und der Baukörper aus der Form gehoben und in die Gebrauchslage gedreht wird.

## Claims

1. Transportable cell in the form of a transformer station partially sunk into the ground and including a transformer room for a transformer or the like, comprising at least one side wall integrally cast with a foundation slab and a roof slab placed thereon, concrete ribs projecting into the interior of the cell and tapering away from the foundation slab in cross section being integrally cast with the foundation slab, characterised in that two side walls (17) at the height (h) of the cell (10), as well as end walls (18, 19) connecting the latter and bottom ribs (36, 38) approximately parallel thereto are monolithically cast with the foundation slab (16), and the bottom ribs and the side walls together form a bottom trough for the transformer room (44) and respective bases for a partition wall or wall panel (40, 42) which can be placed subsequently on said bottom trough and delimits the transformer room between the side walls (17).

2. Cell according to claim 1, characterised in that the end wall (18, 19) has a door (28) for a medium-voltage space (45) or a low-voltage space (47), the upper edge (21) of the end wall (18, 19) optionally extending approximately level with the upper edge (37) of one of the bottom ribs (38) and the door (28) extending between the upper edge of the wall and the side walls (17).

3. Cell according to claim 1 or claim 2, characterised in that a recess (22) for a fan door (24) associated with a frame or a similar movable closure element is provided in at least one side wall of the transformer room, one threshold edge (23) of the recess (22) for the fan door (24) is substantially aligned with the upper edge (37) of the bottom rib (38) associated with the low-voltage space (47) and/or the upper edge (21) of the end walls (18, 19) determines the mounting depth of the cell (10).

4. Cell according to one of claims 1 to 3, characterised in that the bottom region of the medium-voltage space (45) is a sealed trough and is provided with at least one sealing cable gland and/or the transformer room (44) includes a sealed inner trough which in particular is cast into the cell (10).

5. Cell according to one of claims 1 to 4, characterised in that at least one earth bar (59) extends over the region of the sealed trough of the medium-voltage space and the low-voltage space above the upper edge (37) of the bottom rib (36), approximately horizontally along one side wall (17).

6. Cell according to at least one of claims 1 to 5, characterised in that the exchangeable wall panel or partition wall (40, 42) is designed to be inserted into grooves in both side walls (17) and/or that the exchangeable wall panel or partition wall (40, 42) is a support for fixed holding profile sections, securing means and/or connecting parts of switching means (46, 48) and cable glands (52).

7. Cell according to at least one of claims 3 to 6, characterised in that the frame (26, 30) of the fan door (24) and/or the door (28) is a preferably extruded frame profile section cast into the side wall (17).

8. Cell according to claim 7, characterised in that the cross section of the frame profile section (70, 72) has two legs (74, 75) which are approximately at right angles to one another and are connected together by means of a corner or intermediate piece (76) inclined relative thereto, a shaped rib (77) optionally projecting from the leg (74) which can be placed on one wall (17 to 19) or the roof slab (20) and being substantially parallel to the other leg (75), thereby producing an open box profile section together with a corner portion of the other leg (75).

9. Cell according to claim 8, characterised in that at least two integrally cast webs (82, 83) project as anchoring parts from the outer face of the leg (74) of the frame profile section (70) and/or one integrally cast web (83) of the frame profile section (70) forms a channel-shaped space (86) open towards the outside together with the intermediate piece (76) and a shaped hook (84).

10. Cell according to claim 8 or claim 9, characterised in that the intermediate piece (76) has at least one bore (87).

11. Cell according to one of claims 7 to 10, characterised in that one threshold part of the frame formed by the frame profile sections (70, 72) is fixed to a stationary transverse profile section (90) provided at a distance from the threshold edge (23) of the recess (22) in the side wall or from the upper edge (21) of the end wall (18, 19), the transverse profile section (90) optionally being an angle section.

12. Cell according to claim 11, characterised in that the intermediate space between the transverse profile section (90) and a frame profile section (70) sitting on the upper edge (25) situated below the upper edge (21) is filled in by a front panel (66).

13. Cell according to at least one of claims 3 to 12, characterised in that the frame of the fan door (24) is a hollow or box profile section (98) with a double angle profile section (100) surrounding the door panel formed by parallel slats (114), its cross section being in the shape of an S lying on its side, a sealing lip (96) which can bear against the frame profile section (70, 72) projecting from the box profile section, a perforated plate (102) optionally being arranged on the fan door (24) behind the slats (114) and/or a catch channel (101) being arranged at the foot of the fan door (24) behind the slats (114).

14. Cell according to at least one of claims 3 to 12, characterised in that the frame of the fan door (24) is a shaped strip (104) with a substantially H-shaped cross section, the outer side leg (107) of which bears against the frame profile section (70, 72) via a sealing lip (96) and the inner leg (106) of which surrounds parallel slats (114), a perforated plate (102) optionally being arranged on the fan door (24) behind the slats (114) and/or a catch channel (101) being arranged at the foot of the fan door (24) behind the slats (114).

15. Method for the production of a cell according to at least one of the preceding claims, characterised in that the cell consisting of a foundation slab, bottom ribs, side walls and end walls is formed by placing concrete in formwork, rotated through 180° relative to the position of normal use and, after setting and removal of the outer formwork, is released from or pressed out of the conical core formwork by means of a hydraulic device, the formwork parts representing the length and thickness of the monolithically cast bottom ribs being varied by at least 50 mm by means of hydraulic cylinders in that two rectangular expansion joints are provided on the formwork parts representing the top surfaces of the transverse walls and the structure is lifted out of the form and rotated into the position of normal use.

## Revendications

1. Cellule transportable sous la forme d'une sous-station de transformation enfoncée partiellement dans le sol, comportant un espace de transformation pour un transformateur ou similaire, comportant au moins une paroi latérale coulée sur une plaque de fond et une plaque de toit posée sur celle-ci, des nervures en béton se rétrécissant transversalement en s'éloignant de la plaque de fond, étant formées sur la plaque de fond, en faisant saillie dans l'espace intérieur de la cellule, caractérisée en ce que
deux parois latérales (17) de la hauteur (h) de la cellule (10) ainsi que des parois frontales (18, 19) reliant celles-ci et des nervures de fond (36, 38) sensiblement parallèles sont formées de manière monolithique sur la plaque de fond (16), en ce que les nervures de fond forment avec les parois latérales une cuve au sol pour l'espace de transformation (44) ainsi qu'à chaque fois un socle pour une paroi intermédiaire ou plaque formant paroi (40, 42), pouvant être montée ultérieurement, et délimitant l'espace de transformation entre les parois latérales (17).

2. Cellule suivant la revendication 1, caractérisée en ce que la paroi frontale (18, 19) présente une porte obturatrice (28) pour un espace de moyenne tension (45) ou un espace de basse tension (47), l'arête supérieure (21) de la paroi frontale (18, 19) s'étendant le cas échéant sensiblement sur la hauteur de l'arête supérieure (37) de l'une des nervures de fond (38) et la porte obturatrice (28) s'étendant entre l'arête supérieure de la paroi et les parois latérales (17).

3. Cellule suivant la revendication 1 ou 2, caractérisée en ce qu'un creux (22) est prévu dans au moins une paroi latérale de l'espace de transformation pour une porte de ventilateur (24) associée à un châssis, ou pour un élément d'obturation mobile similaire, en ce qu'une arête de seuil (23) du creux (22) prévu pour la porte de ventilateur (24) affleure sensiblement avec l'arête supérieure (37) de la nervure de fond (38) associée à l'espace de faible tension (47) et/ou en ce que l'arête supérieure (21) des parois frontales (18, 19) définit la profondeur de montage de la cellule (10).

4. Cellule suivant l'une des revendications 1 à 3, caractérisée en ce que le secteur de fond de la zone de moyenne tension (45) est réalisé sous la forme d'une cuve étanche et est muni d'au moins un passage étanche de câble et/ou en ce que l'espace de transformation (44) comporte une cuve intérieure étanche qui est moulée en particulier dans la cellule (10).

5. Cellule suivant l'une des revendications 1 à 4, caractérisée en ce qu'au moins une barre de terre (59) s'étend au-dessus de l'arête supérieure (37) de la nervure de fond (36), sur le secteur de la cuve étanche de la zone de moyenne tension et la zone de basse tension, barre qui s'étend sensiblement horizontalement sur une paroi latérale (17).

6. Cellule suivant au moins l'une des revendications 1 à 5, caractérisée en ce que la plaque formant paroi ou la paroi intermédiaire (40, 42) amovible est réalisée de manière à pouvoir être insérée dans des rainures des deux parois latérales (17) et/ou en ce que la plaque formant paroi ou la paroi intermédiaire (40, 42) amovible constitue un support pour des profilés de maintien posés fixement, des moyens de fixation et/ou des pièces de raccordement d'organes de couplage (46, 48) et de passages de câble (52).

7. Cellule suivant l'une au moins des revendications 3 à 6, caractérisée en ce que le châssis (26, 30) de la porte de ventilateur (24) et/ou la porte obturatrice (28) est un profilé de châssis moulé dans la paroi latérale (17) et de préférence extrudé.

8. Cellule suivant la revendication 7, caractérisée en ce que la section transversale du profilé de châssis (70, 72) présente deux côtés (74, 75) sensiblement perpendiculaires l'un à l'autre, reliés entre eux par une pièce d'angle ou une pièce intercalaire (76) inclinée par rapport à eux, une nervure moulée (77) dépassant le cas échéant du bord (74) pouvant être montée sur une paroi (17 à 19) ou la plaque formant toit (20), laquelle nervure est sensiblement parallèle à l'autre côté (75) et forme, avec un segment d'angle de l'autre côté (75), un profilé en caisson ouvert.

9. Cellule suivant la revendication 8, caractérisée en ce qu'au moins deux barrettes formées (82, 83) font saillie, en tant que pièces d'induction, de la face extérieure du côté (74) du profilé de châssis (70), et/ou en ce qu'une barrette formée (83) du profilé de châssis (70) constitue avec la pièce intercalaire (76) et un crochet profilé (84) un espace en forme de gorge (86) s'ouvrant vers l'extérieur.

10. Cellule suivant la revendication 8 ou 9, caractérisée en ce que la pièce intercalaire (76) présente au moins un alésage (87).

11. Cellule suivant l'une des revendications 7 à 10, caractérisée en ce qu'une partie formant seuil du cadre composé par les profilés de châssis (70, 72) est fixée sur un profilé transversal (90) fixe, qui est prévu à distance de l'arête de seuil (23) du creux de paroi latérale (22) ou à distance de l'arête (21) de la paroi frontale (18, 19), le profilé transversal (90) étant éventuellement une cornière.

12. Cellule suivant la revendication 11, caractérisée en ce que l'espace intermédiaire compris entre le profilé transversal (90) et un profilé de châssis (70) reposant sur l'arête supérieure (25) situé sous l'arête supérieure (21) est garni d'une plaque frontale (66).

13. Cellule suivant l'une au moins des revendications 3 à 12, caractérisée en ce que le cadre des portes de ventilateur (24) est réalisé sous la forme d'un profilé creux ou en caisson (98) ayant la forme en coupe d'un S posé et comportant un double profilé angulaire (100) entourant la garniture de porte constituée de lamelles parallèles (114), une lèvre d'étanchéité (96) pouvant être montée contre le profilé de châssis (70, 72) pouvant dépasser du profilé en caisson, une tôle perforée (102) étant éventuellement disposée contre la porte de ventilateur (24) derrière les lamelles (114), et/ou une gouttière collectrice (101) étant disposée au pied de la porte de ventilateur (24), derrière les lamelles (114).

14. Cellule suivant l'une au moins des revendications 3 à 12, caractérisée en ce que le cadre de la porte de ventilateur (24) est une bande de profilé (104) sensiblement en forme de H dans le sens transversal, dont le côté externe (107) est adjacent au profilé de châssis (70, 72) par une lèvre d'étanchéité (96) et dont le côté interne (106) entoure des lamelles parallèles (114), une tôle perforée (102) étant disposée éventuellement contre la porte de ventilateur (24), derrière les lamelles (114), et/ou une gouttière collectrice (101) étant disposée au pied de la porte de ventilateur (24), derrière les lamelles (114).

15. Procédé de fabrication d'une cellule suivant l'une au moins des revendications précédentes, caractérisé en ce que la cellule constituée de la plaque de fond, des nervures de fond, des parois latérales et des parois frontales est bétonnée dans un coffrage, tournée de 180° par rapport à la position d'utilisation, et, après le durcissement et l'enlèvement du coffrage extérieur, est éjectée ou détachée du coffrage intérieur conique au moyen d'un dispositif hydraulique, les parties de coffrage qui délimitent la longueur et l'épaisseur des nervures de fond formées de façon monolithique étant modifiées d'au moins 50 mm au moyen de vérins hydrauliques, du fait de la présence de deux lignes de joint de forme rectangulaire sur les parties de coffrage délimitant les faces supérieures de la paroi transversale, et du fait que le corps est soulevé du moule et est tourné en position d'utilisation.
